# EUROPÄISCHE PATENTSCHRIFT

(11) **EP 4 194 184 B1**
(45) Veröffentlichungstag und Bekanntmachung des Hinweises auf die Patenterteilung: **16.07.2025**
(21) Anmeldenummer: 21212668.4
(22) Anmeldetag: 07.12.2021
(51) Int. Cl.: B29C 65/20, B29C 65/82

(54) **SCHWEISSUNGSBEURTEILUNG WÄHREND SCHWEISSPROZESS**
WELDING ASSESSMENT DURING THE WELDING PROCESS
ÉVALUATION DE LA SOUDURE LORS DU PROCESSUS DE SOUDAGE

(43) Veröffentlichungstag der Anmeldung: 14.06.2023
(73) Patentinhaber: Georg Fischer Rohrleitungssysteme AG, 8201 Schaffhausen (CH)
(72) Erfinder: Barbone, Riccardo, 8200 Schaffhausen (CH)
(74) Vertreter: Fenner, Seraina

(56) Entgegenhaltungen:
- DE-A1- 102010 048 612

## Beschreibung

Die Erfindung betrifft ein Verfahren und ein System beinhaltend, eine Schweissvorrichtung, eine Prüfvorrichtung mit einem zwei Sensoren aufweisenden Prüfkopf, eine Steuerung und einen Speicher, zur Beurteilung einer Stumpfschweissung von Kunststoffrohren oder Fittings in einer Schweissvorrichtung mit folgenden Schritten:
- Einspannen bzw. fixieren der zu verschweissenden Rohrenden mit sich gegenüberliegenden Stirnseiten in einer Schweissvorrichtung,
- Autonomes Ausrichten bzw. Justieren eines Prüfkopfs aufgrund der Rohrparametern zum anschliessenden Erfassen der Rohrenden,
- Prüfen eines vorgegebenen Bereichs an den beiden Rohrenden mittels mindestens eines ersten im Prüfkopf angeordneten Sensors,
- Auswerten der ermittelten Prüfdaten aufgrund vorgegebener Werte,
- Prüfen der Stirnseiten der Rohrenden mittels eines zweiten Sensors, wobei der zweite Sensor ein anderes Prüfverfahren als der erste Sensor anwendet,
- Auswerten der ermittelten Prüfdaten aufgrund vorgegebener Werte,
- Durchführen des Schweissvorgangs inklusiv Aufzeichnung des Schweissvorgangs

Eine Überprüfung einer Stumpfschweissung dient der Qualitätssicherung der Schweissung. Es spielt keine Rolle mit welchem Verfahren die Rohre bzw. Fittings stumpfgeschweisst wurden, sei es mittels berührungslosem IR-Schweissverfahrens, mittels des klassischen Stumpfschweissverfahrens durch Berühren des Heizspiegels oder eines anderen Verfahrens. Entsprechend den zu verschweissenden Rohren bzw. Fittings, das heisst, ihren Abmassen, deren Kunststoff, der Schweisstechnologie die angewandt wird, usw. hat eine Schweissnaht eine gewisse Form bzw. Grösse aufzuweisen, die optisch überprüfbar ist und aufgrund dessen eine Schweissung bisher überprüft wurde. Entsprechend dazu existieren Richtlinien bzw. Normen, welche genau definieren wie eine Naht aussehen muss bzw. wie die zulässigen Abmasse in Bezug auf die Rohr- bzw. Fitting- und Schweisseigenschaften sein müssen, damit sie den Anforderungen entspricht.

Zudem ist bekannt, dass eine solche Schweissnaht zur Kontrolle auch mittels Ultraschall kontrolliert wird, um das Gefüge der Schweissnaht zu überprüfen. Dies erfolgt aber erst nach dem die Schweissnaht komplett abgekühlt ist und bedingt, dass die verschweissten Enden eine gewisse Zeit auf der Schweissvorrichtung aufgespannt bleiben bis eine Ultraschallprüfung der Naht durchgeführt werden kann.

Bisher wurde meist eine manuelle optische Beurteilung und eine Ultraschallprüfung durch eine zuständige Fachperson durchgeführt, die anhand der ihr bekannten Normen und Richtlinien die entstandene Schweissnaht vergleicht und prüft und dann beurteilt.

Nachteilig hierbei ist, dass Beurteilungen durch eine Fachperson sehr zeitintensiv auch aufgrund der Abkühlzeit der Schweissnaht, und somit sehr teuer sind.

Aus der EP 3 550 256 A1 und der EP 2 963 380 A1 sind Prüfverfahren einer Schweissnaht bekannt, die aber die Schweissnaht nur optisch durch einen Sensor auf ihre Form prüfen.

Aus der EP 3 816 621 A1 ist eine Vorrichtung und ein Verfahren einer Ultraschallprüfung für eine Stumpfschweissnaht an einem Kunststoffrohr bekannt. Auch hier liegt der Nachteil darin, dass die Naht zuerst vollständig abgekühlt sein muss bevor eine solche Prüfung durchgeführt werden kann, was sehr zeitintensiv ist und deshalb solche Prüfungen mit den entsprechenden Fachleuten sehr teuer sind.

Zudem ist für jede Prüfung eine spezielle Vorrichtung einzusetzen, was ebenfalls viel Zeit für deren Installation benötigt sowie viel Equipment bedarf, das immer an die Orte bzw. Baustellen mitgebracht werden muss wo solche Schweissungen durchgeführt werden.

Es ist Aufgabe der Erfindung ein Verfahren und ein System zur Beurteilung einer Stumpfschweissung vorzuschlagen, welches zeit- und personalsparend ist, wodurch Schweissungen bzw. deren Prüfungen günstiger durchgeführt werden können und zudem die Auswertungen bzw. Bewertungen verlässlich sind.

Diese Aufgabe wird erfindungsgemäss dadurch gelöst, dass die abschliessende Auswertung der Schweissung aufgrund der ermittelten Prüfdaten und des aufgezeichneten Schweissvorgangs erfolgt sowie dass der Prüfkopf zwei Sensoren enthält, wobei die Sensoren unterschiedliche Prüfverfahren aufweisen.

Das erfindungsgemässe Verfahren zur Beurteilung einer Stumpfschweissung von Kunststoffrohren und Fittings in einer Schweissvorrichtung beinhaltet folgende Schritte:
Die zu verschweissenden Rohrenden oder Fittingsenden werden in einer Schweissvorrichtung eingespannt bzw. fixiert, wobei die Stirnseiten der Rohr- oder Fittingsenden sich gegenüberliegend angeordnet sind. Woraufhin sich ein Prüfkopf autonom aufgrund der Rohrparameter ausrichtet bzw. justiert um die Rohrenden anschliessend für eine Prüfung erfassen zu können. Mittels des Prüfkopfs bzw. mittels mindestens eines ersten im Prüfkopf angeordneten Sensors, erfolgt dann eine Prüfung eines vorgegebenen Bereichs, jeweils an den beiden Rohrenden. Die ermittelten Prüfdaten werden dann ausgewertet und aufgrund vorgegebener Werte bewertet. Wobei die Auswertung der ermittelten Prüfdaten vorzugsweise aufgrund eines Algorithmus erfolgt, aufgrund dessen Berechnung und Bewertung der vorgegebene Bereich für gut oder ungenügend für eine Schweissung definiert wird. Wird der Bereich als ungenügend definiert kann dieses Rohrendstück beispielsweise abgetrennt werden und dann mit einem neuen Bereich eine Prüfung durchgeführt werden. Bei einer Bewertung als gut, kann das Verfahren weitergeführt werden. Wobei die vorgegebenen Werte zur Bewertung vorzugsweise in einer Steuerung bzw. in einem Speicher der Steuerung hinterlegt sind, wie auch der genutzte Algorithmus. Die vorgegebenen Werte dienen dann als Vergleichswerte zu den, mittels des Algorithmus verrechneten Prüfdaten, bzw. um dann die Bewertung als gut oder ungenügend durchzuführen. Es ist vorteilhaft wenn die Werte mit neuen Erfahrungswerten immer wieder abgeglichen, angepasst und ergänzt werden, wobei das die Steuerung autonom ausführen kann oder auch manuell Daten eingefügt werden können. Zudem ist es vorteilhaft wenn die Werte oder sonstige Daten für das erfindungsgemässe Verfahren in einer Cloud oder einem sonstigen externen, dezentralen Speicherort gespeichert sind.

Des Weiteren werden die Stirnseiten der Rohrenden mittels eines zweiten Sensors geprüft, wobei der zweite Sensor ein anderes Prüfverfahren als der erste Sensor anwendet. Vorzugsweise werden die Stirnseiten der Rohrenden vor dem Überprüfen zuerst gehobelt um eine saubere und plane Fläche zu erhalten und anschliessend wird die optische Prüfung durchgeführt. Auch hier werden die ermittelten Prüfdaten mittels eines Algorithmus ausgewertet bzw. kalkuliert und aufgrund vorgegebener Werte eingestuft bzw. für geeignet oder ungeeignet für eine Schweissung bewertet. Dies erfolgt wie bei der ersten Prüfung ebenfalls durch einen Vergleich mit hinterlegten Werten, wobei auch diese vorzugsweise immer wieder neu abgeglichen und ergänzt werden. Wenn die zuvor erfolgten Prüfungen jeweils als Ergebnis der Auswertungen ergeben haben, dass die Rohrenden geeignet für eine Schweissung sind, kann eine Schweissung durchgeführt werden. Als vorteilhaft hat sich gezeigt, wenn der zur Erwärmung der Rohrenden eingesetzte Schweissspiegel, vor dessen Einsatz, ebenfalls optisch geprüft wird, vorzugsweise mittels des zweiten Sensors. So kann auch bei diesem Schritt vermieden werden, dass Verunreinigungen in die Schweissung miteingebracht werden. Der durchgeführte Schweissprozess wird vom System bzw. der Steuerung aufgezeichnet, um zu ermitteln ob der Prozess korrekt ausgeführt und alle Randbedingungen eingehalten wurden. Vorzugsweise werden dazu die Schweisszeiten, Schweisstemperaturen, der Schweissdruck wie auch die zugeführte Sehweissenergie überwacht und aufgezeichnet. Alternativ können auch noch weitere Daten überwacht und aufgezeichnet werden, wie beispielsweise die Umgebungstemperatur usw. Diese Schweissdaten fliessen dann auch in die abschliessende Auswertung der Schweissung ein.

Nach der Schweissung erfolgt erneut eine Auswertung der Schweissung aufgrund der ermittelten Daten mithilfe eines Algorithmus. Für die abschliessende Auswertung der Schweissung werden die vorausgehenden Prüfdaten und die aufgezeichneten Daten des durchgeführten Schweissprozesses mit Hilfe eines Algorithmus ausgewertet und die Schweissnaht als gut oder unbrauchbar eingestuft.

Es ist vorteilhaft, dass das Auswerten der Schweissung aufgrund eines Algorithmus erfolgt, der die ermittelten Prüfdaten und den aufgezeichneten Schweissvorgang berücksichtigt bzw. in der Kalkulation verwendet. Wobei der Algorithmus die ermittelten Prüfdaten mindestens aus der ersten und zweiten Prüfung miteinschliesst, welche auf die Ultraschallprüfung des vorgegebenen Bereichs zurückgehen und auf die optische Prüfung der Stirnseite. Zudem beinhaltet der Algorithmus die aufgezeichneten Daten des Schweissprozesses bzw. dessen Miteinbeziehen, vorzugsweise Daten über die Schweisstemperaturen und Schweisszeiten.

Es ist vorteilhaft, wenn mittels der Prüfung des vorgegebenen Bereichs an den Rohrenden durch den ersten Sensor, das Gefüge des Rohres überprüft wird.

Die Prüfung des vorgegebenen Bereichs an den Rohrenden, welche mittels des ersten Sensors durchgeführt wird, überprüft das Gefüge des Rohres vor dem Schweissvorgang. Da die meisten ungenügenden Schweissungen daher stammen, dass bereits Materialfehler wie Einschlüsse, Defekts, Verunreinigungen etc. im Rohrende im Bereich der Schweisszone bestehen, können durch eine Gefügeprüfung der Rohrwandung vor dem Schweissen im vorgegebenen Bereich bereits Fehler vermieden werden.

Es ist vorteilhaft wenn die Schweissvorrichtung eine Steuerung sowie einen Speicher zur Datenverarbeitung aufweist, wobei auch eine Prüfungsvorrichtung an die Schweissvorrichtung adaptierbar sein kann und die Prüfvorrichtung eine Steuerung sowie einen Speicher zur Datenverarbeitung aufweist.

Als vorteilhaft hat sich gezeigt, wenn der vorgegebene Bereich an den Rohrenden mittels Schallwellen vorzugsweise Ultraschall geprüft wird. Dadurch kann ermittelt werden ob das Gefüge keine Einschlüsse oder sonstige Unreinheiten aufweist was eine Schweissnaht schwächen bzw. diese nicht mehr den Anforderungen entsprechen würde.

Vorzugsweise ist der zweite Sensor ein optischer Sensor, wodurch eine optische Prüfung der Stirnseiten der Rohrenden erfolgt. Die Stirnseiten werden auf Verschmutzung, Beschädigungen oder andere Kriterien geprüft, die der Schweissung schaden könnten. Der zweite Sensor ist vorzugsweise ebenfalls im Prüfkopf angeordnet und dient vorzugsweise auch der Ausrichtung bzw. Justierung des Prüfkopfs in Bezug auf die eingespannten Rohrenden. Der optische Sensor ist vorzugsweise als lichtempfindlicher Sensor, speziell bevorzugt als Kamera ausgebildet.

Gemäss einer bevorzugten Ausführungsform ist der vorgegebene Bereich an den beiden Rohrenden von der Stirnseite beabstandet angeordnet und entspricht der Schweisszone, welche für die Schweissung erwärmt wird. Da in der Regel der vorderste Bereich der Rohrenden abgehobelt wird, da dieser meist Verschmutzungen und keine plane Oberfläche aufweist, befindet sich der vorgegebene Bereich, welcher es zu prüfen gilt, von der Stirnseite beabstandet bzw. versetzt angeordnet, da nach dem Hobeln der Stirnseite dieser Bereich direkt am Heizspiegeln anliegt und zur Schweisszone wird.

Das erfindungsgemässe Verfahren zeichnet sich vorzugsweise auch dadurch aus, dass die eingespannten Rohrenden von der Schweissvorrichtung oder dem Prüfkopf zur Ermittlung der Rohrparameter erkannt werden, wobei der Erkennung durch Scannen der Rohrenden, eines Bar- oder Strichcodes oder durch manuelle Eingabe der Rohrdaten erfolgt. Es ist vorteilhaft wenn der optische Sensor im Prüfkopf die Rohrenden autonom anhand ihrer Abmasse und Farbe erkennt oder durch einen Bar- oder Strichcode der erfasst werden kann. Wobei dies auch durch einen weiteren Sensor erfolgen kann der mit der Steuerung verbunden ist.

Gemäss einer weiteren bevorzugten Ausführungsform hat sich gezeigt, wenn der vorgegebene Bereich an den Rohrenden auch optisch geprüft wird, vorzugsweise mittels des zweiten Sensors. Neben der Gefügeprüfung vorzugsweise mittels Ultraschall hat sich gezeigt, dass es von Vorteil ist diesen Bereich auch noch optisch zu Prüfen da manche Verunreinigungen auch auf der Oberfläche vorliegen können was dann durch die optische Prüfung erkannt wird und was ebenfalls einen negativen Einfluss auf die Schweissung haben kann.

Als weitere vorteilhafte Ausführungsform hat sich auch gezeigt, wenn nach dem Schweissvorgang die entstandene Schweissnaht noch vor dem Abkühlen und währenddessen die Rohrenden noch in der Schweissvorrichtung eingespannt sind, geprüft wird, vorzugsweise mittels Ultraschall und/oder Kamera. Einerseits ermöglicht dies nochmals eine weitere Prüfung und andererseits wird hierdurch kein grosser Zeitverlust in Kauf genommen da die Prüfung direkt nach dem Durchführen der Schweissung in der Schweissvorrichtung erfolgt. Es bedarf also keiner Wartezeit bis die Schweissnaht abgekühlt ist, sondern die Gefügeprüfung der Schweissnaht kann direkt anschliessend nach dem Schweissen erfolgen.

Diese Aufgabe wird erfindungsgemäss auch dadurch gelöst, dass ein erfindungsgemässes System zur Beurteilung einer Stumpfschweissung von Kunststoffrohren oder Fittings eine Schweissvorrichtung zum stirnseitigen Verschweissen von Kunststoffrohrenden oder Fittingsenden beinhaltet, sowie eine Prüfvorrichtung, wobei die Prüfvorrichtung einen Prüfkopf aufweist und im Prüfkopf mindestens zwei Sensoren angeordnet sind, eine Steuerung und einen Speicher, wobei die Sensoren unterschiedliche Prüfverfahren aufweisen bzw. auf unterschiedliche Prüftechnologien basieren.

Die Prüfvorrichtung kann nachträglich auf eine bereits bestehende Schweissvorrichtung adaptierter werden sowie sie auch in der Schweissvorrichtung gleich integriert sein kann. Dies hat Vorteile bezüglich der Steuerung und des Speichers da dann das System eine Steuerung und einen Speicher aufweist und bei einer nachgerüsteten Prüfvorrichtung kann es durchaus sein, dass die Schweissvorrichtung so wie die Prüfvorrichtung eine Steuerung und einen Speicher aufweisen und diese synchronisiert werden sollten oder nur eines der Vorrichtungen weist eine Steuerung und einen Speicher auf und das andere lässt sich daran anschliessen.

Vorzugsweise weist der Prüfkopf einen optischen Sensor und einen akustischen Sensor auf. Dies ermöglicht eine erste Prüfung im vorgegebenen Bereich um das Gefüge zu prüfen, wobei hierzu der akustische Sensor eingesetzt wird. Der optische Sensor überprüft anschliessend die Oberfläche der Stirnseiten der zu verschweissenden Rohre oder Fittings. Wobei der optische Sensor auch für weitere Prüfungen oder auch Erkennungen genutzt werden kann, wie aus der Beschreibung zum Verfahren erwähnt. Selbstverständlich können auch noch weitere Sensoren im System integriert werden um weitere Prüfungen oder Erkennungen durchzuführen.

Als vorteilhaft hat sich gezeigt, wenn der erste Sensor ein Ultraschallsensor und der zweite Sensor ein lichtempfindlicher Sensor ist, vorzugsweise eine Kamera. Mit dem ersten Sensor wird das Gefüge und die eventuellen Verunreinigungen erkannt und mithilfe eine Algorithmus ausgewertet. Aufgrund dieser ersten Prüfung wird dann selektiert ob die vorgegeben Bereiche sich für eine Schweissung eignen oder nicht, wie bereits im Vorfeld zum Verfahren erläutert. Ebenfalls werden die Prüfdaten, welche mit dem lichtempfindlichen Sensor erfasst wurden, mittels eines Algorithmus ausgewertet ob die geprüften Stellen sich für eine Schweissung eignen oder nicht. Durch diese frühzeitige Prüfung der Rohre und Fittings können die Rohrenden und Fittingsenden, die nicht den Anforderungen entsprechen vor dem Verschweissen erkannt werden und entsprechend entfernt werden. Dies spart viel Zeit ein, da kaum noch Schweissungen durchgeführt werden bei denen bereits das Basismaterial nicht den Anforderungen entspricht und somit unbrauchbar wären. Eine Prüfung der Rohrenden und Fittingsenden vor dem Schweissen reduziert die Fehlschweissungen massgeblich, da die meisten Fehlschweissungen aufgrund fehlerhaftem Ausgangsmaterial entstehen, können diese schon vor dem Schweissen vermieden bzw. eliminiert werden.

Eine bevorzugte Ausführungsform besteht darin, dass die Prüfvorrichtung in der Schweissvorrichtung integriert ist. Dadurch kann, wie oben erwähnt, alles mit derselben Steuerung durchgeführt werden. Zudem kann der Prüfkopf optimal in der Schweissvorrichtung angeordnet werden.

Alle Ausgestaltungmöglichkeiten sind untereinander frei kombinierbar wie die Merkmale des Verfahrens auf das System anwendbar sind und umgekehrt.

Ein Ausführungsbeispiel der Erfindung wird anhand der Figuren beschrieben, wobei sich die Erfindung nicht nur auf das Ausführungsbeispiel beschränkt. Es zeigen:

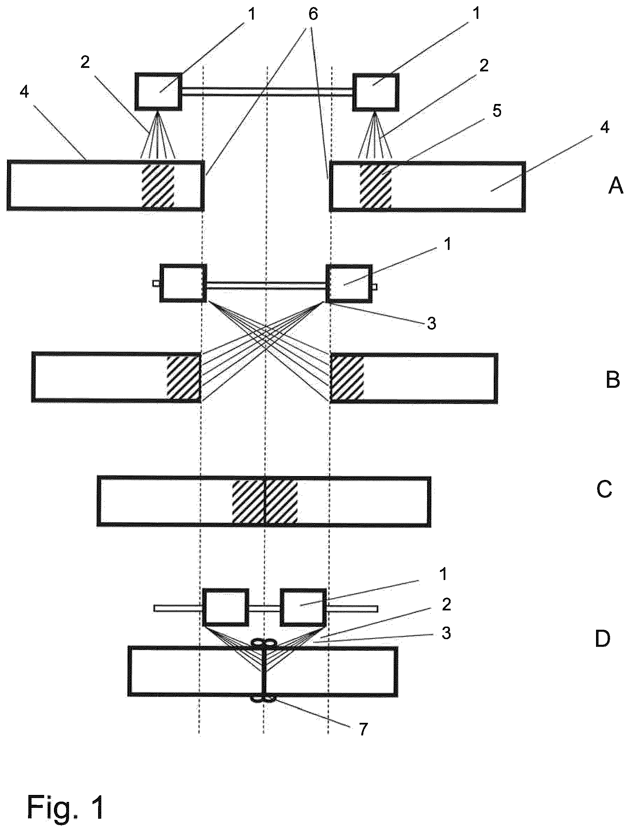

Fig. 1 ein schematischer Ablauf des erfindungsgemässen Verfahrens mit einer schematischen Anordnung der Bestandteile des erfindungsgemässen Systems.

Die in Fig. 1 dargestellte Zeichnung zeigt den schematischen Ablauf des erfindungsgemässen Verfahrens sowie eine schematische Skizzierung der Bestandteile des erfindungsgemässen Systems. In Schritt A ist ersichtlich, dass der Prüfkopf 1 den vorgegeben Bereich 5 prüft bzw. scannt. Bevor dieser Schritt erfolgt, wurden die zu verschweissenden Rohr- und/oder Fittingsenden 4 in der Schweissvorrichtung (nicht ersichtlich) eingespannt. Die Stirnseiten der Rohr- oder Fittingsenden 6 wurden sich gegenüber ausgerichtet. Daraufhin richtet sich der Prüfkopf 1 aufgrund der eingespannten Rohrenden 6 ein bzw. fährt die gewünschte Position autonom an. Dies wird dadurch erreicht, dass die Steuerung der Vorrichtung die eingespannten Rohrenden 6 bzw. die Rohrparameter erkennt, wobei das durch das Erfassen eines Codes, durch manuelle Eingabe oder durch die Erkennung der Rohre an sich, aufgrund der Dimension, Farbe etc. erfolgen kann. Aufgrund der Steuerung hinterlegten Werte richtet sich der Prüfkopf 1 autonom aus. Daraufhin erfolgt die Prüfung bzw. das Scannen des vorgegeben Bereichs 5 der Rohrenden 6 durch den ersten Sensor 2 im Prüfkopf 1, welcher vorzugsweise als akustischer Sensor, speziell bevorzugt als Ultraschallsensor ausgebildet ist. Anschliessend erfolgt die Auswertung der Prüfdaten mithilfe eines Algorithmus, der es ermöglicht aufgrund der Prüfdaten den Bereich als ausreichend oder nicht ausreichend für eine Schweissung einzustufen. Wird der Bereich als ausreichend eingestuft, erfolgt Schritt B. Bei diesem wird mittels eines zweiten Sensors 3 der vorzugsweise ebenso im Prüfkopf 1 angeordnet ist, die Oberfläche der Stirnseiten 6 der Rohrenden geprüft. Selbstverständlich wurden zuvor die Stirnseiten 6 bis an die Schweisszone 5, welche dem vorgegebenen Bereich entspricht abgehobelt. Hierzu wird ein optischer Sensor 3 eingesetzt, vorzugsweise ein lichtempfindlicher Sensor, speziell bevorzugt eine Kamera. Auch hier erfolgt eine anschliessende Auswertung der Prüfdaten mithilfe eines Algorithmus, welcher definiert ob die Stirnseiten 6 den Anforderungen für eine Schweissung 7 erfüllen. Wenn ja, erfolgt die Schweissung, wenn nein, kann beispielsweise die Stirnseite 6 nochmals überarbeitet werden. Bei Schritt C erkennt man die bereits zusammengefahrenen Rohrenden 4, wobei diese natürlich zuerst mit einem Schweissspiegel (nicht sichtbar) erwärmt wurden damit sich das Material beim Zusammenfahren zusammenfügen lässt. Es besteht auch die Möglichkeit den Schweissspiegel vor dem Heizvorgang noch mittels des optischen Sensors 3 oder eines zusätzlichen optischen Sensors 3 zu überprüfen, damit dieser nicht wieder Verunreinigungen in die Schweissung miteinbringt.

Im Schritt D ist schlussendlich die Schweissnaht 7 nach der Schweissung zu erkennen, wobei auch diese noch mittels des akustischen 2 und/oder optischen 3 Sensors überprüft werden kann. Selbstverständlich wird auch der Schweissvorgang, dass heisst, die Zeiten, Temperaturen usw. überwacht und auch diese Schweissdaten werden in der Steuerung erfasst. Schlussendlich wird eine abschliessende Auswertung der Schweissung durchgeführt aufgrund der ersten und zweiten Prüfdaten sowie der aufgezeichneten Schweissdaten, wobei diese Daten mithilfe eines Algorithmus ausgewertet werden und diese die Schlussfolgerung ergeben ob die Schweissung als gut oder ungenügend zu bewerten ist. All diese Daten können in der Schweissvorrichtung, der Prüfvorrichtung, also dem System oder in einem entfernten Speicherort gespeichert werden. Zudem kann mit der Steuerung sowie mit einer portablen Bedieneinheit jederzeit auf die Daten zugegriffen, wie auch aktualisiert werden. Dies kann autonom oder manuell erfolgen. Zudem kann ein Datenaustausch zwischen weiteren Geräten erfolgen.

### Bezugszeichenliste

- 1: Prüfkopf
- 2: Erster Sensor
- 3: Zweiter Sensor
- 4: Rohrenden / Fittingsenden
- 5: Vorgegebener Bereich / Schweisszone
- 6: Stirnseite
- 7: Schweissung / Schweissnaht

## Patentansprüche

1. Verfahren zur Beurteilung einer Stumpfschweissung (7) von Kunststoffrohren oder Fittings in einer Schweissvorrichtung mit folgenden Schritten:
- Einspannen bzw. fixieren der zu verschweissenden Rohrenden (4) mit sich gegenüberliegenden Stirnseiten (6) auf einer Schweissvorrichtung,
- Autonomes Ausrichten bzw. Justieren eines Prüfkopfs (1) aufgrund der Rohrparametern zum anschliessenden Erfassen der Rohrenden (4),
- Prüfen eines vorgegebenen Bereichs (5) an den beiden Rohrenden (4) mittels mindestens eines ersten im Prüfkopf (1) angeordneten Sensors (2),
- Prüfen der Stirnseiten (6) der Rohrenden (4) mittels eines zweiten Sensors (3), wobei der zweite Sensor (3) ein anderes Prüfverfahren als der erste Sensor (2) anwendet,
- Auswerten der zuvor ermittelten Prüfdaten aufgrund vorgegebener Werte,
- Durchführen des Schweissvorgangs inklusiv Aufzeichnung des Schweissvorgangs,
**dadurch gekennzeichnet, dass** eine abschliessende Auswertung der Schweissung aufgrund der ermittelten Prüfdaten und des aufgezeichneten Schweissvorgangs erfolgt.

2. Verfahren nach Anspruch 1, **dadurch gekennzeichnet, dass** die abschliessende Auswertung der Schweissung aufgrund eines Algorithmus erfolgt, der die ermittelten Prüfdaten und den aufgezeichneten Schweissvorgang berücksichtigt.

3. Verfahren nach einem der Ansprüche 1 oder 2, **dadurch gekennzeichnet, dass** mittels der Prüfung des vorgegebenen Bereichs (5) an den Rohrenden (4) mittels des ersten Sensors (2) das Gefüge des Rohres überprüft wird.

4. Verfahren nach einem der Ansprüche 1 bis 3, **dadurch gekennzeichnet, dass** der vorgegebene Bereich (5) an den Rohrenden (4) mittels Schallwellen vorzugsweise Ultraschall geprüft wird.

5. Verfahren nach einem der Ansprüche 1 bis 4, **dadurch gekennzeichnet, dass** der zweite Sensor (3) ein optischer Sensor ist und eine optische Prüfung der Stirnseiten (6) der Rohrenden (4) erfolgt, vorzugsweise mittels eines lichtempfindlichen Sensors.

6. Verfahren nach einem der Ansprüche 1 bis 5, **dadurch gekennzeichnet, dass** der vorgegebene Bereich (5) an den beiden Rohrenden (4) von der Stirnseite (6) beabstandet ist und dem Bereich der Schweisszone für die Schweissung entspricht.

7. Verfahren nach einem der Ansprüche 1 bis 6, **dadurch gekennzeichnet, dass** die eingespannten Rohrenden (4) von der Schweissvorrichtung oder dem Prüfkopf (1) erkannt werden, wobei die Erkennung durch Scannen der Rohrenden (4), eines Bar- oder Strichcodes oder durch manuelle Eingabe der Rohrparameter erfolgt.

8. Verfahren nach einem der Ansprüche 1 bis 7, **dadurch gekennzeichnet, dass** der vorgegebene Bereich (5) an den Rohrenden (4) optisch geprüft wird, vorzugsweise mittels des zweiten Sensors (3).

9. Verfahren nach einem der Ansprüche 1 bis 8, **dadurch gekennzeichnet, dass** nach dem Schweissvorgang die entstandene Schweissnaht (7) noch vor dem Abkühlen und während der Fixierung in der Schweissvorrichtung geprüft wird, vorzugsweise mittels Ultraschall.

10. System zur Beurteilung einer Stumpfschweissung von Kunststoffrohren oder Fittings vorzugsweise nach dem Verfahren nach einem der Ansprüche 1 bis 9, beinhaltend, eine Schweissvorrichtung zum stirnseitigen Verschweissen von Kunststoffrohrenden (4) oder Fittingsenden (4), eine Prüfvorrichtung, wobei die Prüfvorrichtung einen Prüfkopf (1) aufweist und im Prüfkopf (1) mindestens zwei Sensoren (2, 3) angeordnet sind, eine Steuerung und einen Speicher, **dadurch gekennzeichnet, dass** die Sensoren (2, 3) unterschiedliche Prüfverfahren aufweisen.

11. System nach Anspruch 10, **dadurch gekennzeichnet, dass** der Prüfkopf (1) einen optischen Sensor (3) und einen akustischen Sensor (2) aufweist.

12. System nach einem der Ansprüche 10 oder 11, **dadurch gekennzeichnet, dass** der erste Sensor (2) ein Ultraschallsensor und der zweite Sensor (3) ein lichtempfindlicher Sensor ist, vorzugsweise eine Kamera.

13. System nach einem der Ansprüche 10 bis 12, **dadurch gekennzeichnet, dass** die Prüfvorrichtung in der Schweissvorrichtung integriert ist.

## Claims

1. Method for assessing a butt weld (7) of plastic pipes or fittings in a welding device having the following steps:
- clamping or fixing the pipe ends (4) to be welded with opposing end faces (6) in a welding device,
- autonomously aligning or adjusting an inspection head (1) on the basis of the pipe parameters for subsequently acquiring the pipe ends (4),
- inspecting a predetermined region (5) at the two pipe ends (4) by means of at least one first sensor (2) arranged in the inspection head (1),
- inspecting the end faces (6) of the pipe ends (4) by means of a second sensor (3), wherein the second sensor (3) uses a different inspection method than the first sensor (2),
- evaluating the previously ascertained inspection data on the basis of predetermined values,
- carrying out the welding process including recording the welding process,
**characterized in that** a final evaluation of the weld is carried out on the basis of the ascertained inspection data and the recorded welding process.

2. Method according to Claim 1, **characterized in that** the final evaluation of the weld is carried out on the basis of an algorithm which takes into consideration the ascertained inspection data and the recorded welding process.

3. Method according to one of Claims 1 or 2, **characterized in that** the microstructure of the pipe is checked by means of the inspection of the predetermined region (5) at the pipe ends (4) by means of the first sensor (2).

4. Method according to any one of Claims 1 to 3, **characterized in that** the predetermined region (5) at the pipe ends (4) is inspected by means of sound waves, preferably ultrasound.

5. Method according to any one of Claims 1 to 4, **characterized in that** the second sensor (3) is an optical sensor and an optical inspection of the end faces (6) of the pipe ends (4) takes place, preferably by means of a light-sensitive sensor.

6. Method according to any one of Claims 1 to 5, **characterized in that** the predetermined region (5) at the two pipe ends (4) is spaced apart from the end face (6) and corresponds to the region of the welding zone for the weld.

7. Method according to any one of Claims 1 to 6, **characterized in that** the clamped pipe ends (4) are detected by the welding device or the inspection head (1), wherein the detection is carried out by scanning the pipe ends (4), scanning a barcode, or by manual input of the pipe parameters.

8. Method according to any one of Claims 1 to 7, **characterized in that** the predetermined region (5) at the pipe ends (4) is optically inspected, preferably by means of the second sensor (3).

9. Method according to any one of Claims 1 to 8, **characterized in that**, after the welding process, the resulting weld seam (7) is inspected even before the cooling and during the fixing in the welding device, preferably by means of ultrasound.

10. System for assessing a butt weld of plastic pipes or fittings, preferably according to the method according to any one of Claims 1 to 9, including a welding device for the end-face welding of plastic pipe ends (4) or fitting ends (4), an inspection device, wherein the inspection device has an inspection head (1) and at least two sensors (2, 3) are arranged in the inspection head (1), a controller, and a memory, **characterized in that** the sensors (2, 3) have different inspection methods.

11. System according to Claim 10, **characterized in that** the inspection head (1) has an optical sensor (3) and an acoustic sensor (2).

12. System according to one of Claims 10 or 11, **characterized in that** the first sensor (2) is an ultrasonic sensor and the second sensor (3) is a light-sensitive sensor, preferably a camera.

13. System according to any one of Claims 10 to 12, **characterized in that** the inspection device is integrated in the welding device.

## Revendications

1. Procédé d'évaluation d'une soudure bout à bout (7) de tubes en matière plastique ou de raccords dans un dispositif de soudage, avec les étapes suivantes :
- le serrage ou la fixation des extrémités de tube (4) à souder avec des côtés frontaux (6) opposés sur un dispositif de soudage,
- l'alignement ou l'ajustement autonome d'une tête de contrôle (1) sur la base des paramètres de tube pour la saisie ultérieure des extrémités de tube (4),
- le contrôle d'une région prédéfinie (5) aux deux extrémités de tube (4) au moyen d'au moins un premier capteur (2) agencé dans la tête de contrôle (1),
- le contrôle des côtés frontaux (6) des extrémités de tube (4) au moyen d'un deuxième capteur (3), le deuxième capteur (3) appliquant un procédé de contrôle différent de celui du premier capteur (2),
- l'évaluation des données de contrôle précédemment déterminées sur la base de valeurs prédéfinies,
- l'exécution du processus de soudage, y compris l'enregistrement du processus de soudage,
**caractérisé en ce qu'**une évaluation finale de la soudure est effectuée sur la base des données de contrôle déterminées et du processus de soudage enregistré.

2. Procédé selon la revendication 1, **caractérisé en ce que** l'évaluation finale de la soudure est effectuée sur la base d'un algorithme qui tient compte des données de contrôle déterminées et du processus de soudage enregistré.

3. Procédé selon l'une quelconque des revendications 1 ou 2, **caractérisé en ce que** la structure du tube est contrôlée au moyen du contrôle de la région prédéfinie (5) aux extrémités de tube (4) au moyen du premier capteur (2).

4. Procédé selon l'une quelconque des revendications 1 à 3, **caractérisé en ce que** la région prédéfinie (5) aux extrémités de tube (4) est contrôlée au moyen d'ondes sonores, de préférence d'ultrasons.

5. Procédé selon l'une quelconque des revendications 1 à 4, **caractérisé en ce que** le deuxième capteur (3) est un capteur optique et qu'un contrôle optique des côtés frontaux (6) des extrémités de tube (4) est effectué, de préférence au moyen d'un capteur photosensible.

6. Procédé selon l'une quelconque des revendications 1 à 5, **caractérisé en ce que** la région prédéfinie (5) aux deux extrémités de tube (4) est espacée du côté frontal (6) et correspond à la région de la zone de soudure pour le soudage.

7. Procédé selon l'une quelconque des revendications 1 à 6, **caractérisé en ce que** les extrémités de tube (4) serrées sont reconnues par le dispositif de soudage ou la tête de contrôle (1), la reconnaissance s'effectuant par balayage des extrémités de tube (4), d'un code à barres ou d'un code-barres, ou par saisie manuelle des paramètres de tube.

8. Procédé selon l'une quelconque des revendications 1 à 7, **caractérisé en ce que** la région prédéfinie (5) aux extrémités de tube (4) est contrôlée optiquement, de préférence au moyen du deuxième capteur (3).

9. Procédé selon l'une quelconque des revendications 1 à 8, **caractérisé en ce qu'**après le processus de soudage, le cordon de soudure (7) obtenu est contrôlé, de préférence par ultrasons, avant même le refroidissement et pendant la fixation dans le dispositif de soudage.

10. Système pour évaluer un soudage bout à bout de tubes en matière plastique ou de raccords, de préférence par le procédé selon l'une quelconque des revendications 1 à 9, comprenant un dispositif de soudage pour le soudage côté frontal d'extrémités de tubes (4) en matière plastique ou d'extrémités de raccords (4), un dispositif de contrôle, le dispositif de contrôle présentant une tête de contrôle (1) et au moins deux capteurs (2, 3) étant agencés dans la tête de contrôle (1), une commande et une mémoire, **caractérisé en ce que** les capteurs (2, 3) présentent différents procédés de contrôle.

11. Système selon la revendication 10, **caractérisé en ce que** la tête de contrôle (1) présente un capteur optique (3) et un capteur acoustique (2).

12. Système selon l'une quelconque des revendications 10 ou 11, **caractérisé en ce que** le premier capteur (2) est un capteur à ultrasons et le deuxième capteur (3) est un capteur photosensible, de préférence une caméra.

13. Système selon l'une quelconque des revendications 10 à 12, **caractérisé en ce que** le dispositif de contrôle est intégré dans le dispositif de soudage.
